# EUROPEAN PATENT SPECIFICATION

(11) **EP 2 496 536 B1**
(45) Date of publication and mention of the grant of the patent: **04.04.2018**
(21) Application number: 10800692.5
(22) Date of filing: 03.11.2010
(51) Int. Cl.: C05B 17/00, C05C 9/02, C05F 11/08

(54) **MIXTURE OF MATERIALS FOR THE USE AS ORGANIC FERTILIZER AND FOR SOIL IMPROVEMENT**
MISCHUNG VON MATERIALIEN ZUR VERWENDUNG ALS ORGANISCHER DÜNGER UND ZUR BODENVERBESSERUNG
MÉLANGE DE MATIÈRES DESTINÉ À UNE UTILISATION EN TANT QU'ENGRAIS ORGANIQUE ET POUR L'AMENDEMENT DU SOL

(30) Priority: 04.11.2009 DE 102009051901
(43) Date of publication of application: 12.09.2012
(73) Proprietor: Abitep GmbH, 12489 Berlin (DE); Profert Technology GmbH, 52428 Jülich (DE)
(72) Inventor: JUNGE, Helmut, 15366 Hoppegarten (DE); JASCHKOWITZ, Michael, 47918 Tönisvorst (DE)
(74) Representative: Baumbach, Friedrich
(86) International application number: PCT/EP2010/006698
(87) International publication number: WO 2011/054501

(56) References cited:
- WO-A1-2006/046948
- WO-A2-03/026416
- US-A1- 2004 241 250
- US-A1- 2004 242 419
- US-A1- 2004 242 424
- US-A1- 2006 083 725
- US-B1- 6 228 806
- US-B1- 6 311 426

## Description

### BACKGROUND OF THE INVENTION

### Field of the Invention

The invention comprises a mixture of materials to be used as organic fertilizer and for soil improvement. Areas of application are agriculture, forestry and horticulture.

### State of the art

Organic fertilization and soil improvement are important requirements for a high crop yield. Especially nitrate, phosphor and potassium compounds have to be added. These fertilizers have the disadvantage of being washed out by the rain. Hence a large part of customary fertilizers seeps away into the soil and pollutes the water and the environment.

Healthy soil conditions with a balanced microflora are a key requirement for successful cultivation of plants. Excessive use of agro chemicals - chemical pesticides, fertilizers and other substances - but also monoculture, mistakes in the soil cultivation and disadvantageous climate conditions can cause the microflora of the soil to become unbalanced for a long period of time. This can be the cause for an outbreak of plant-pathogenic micro-organisms in the soil and the occurrence of plant disease with bad damage and loss to the crop or quality reduction of the yield and accordingly its suitability for storage.

Modern methods of ecologic and integrated cultivation of plants consider this knowledge when agro-chemicals are applied and when the cultivation is planned. When deficits occur in the microflora there is the need for measures to activate it.

Apart from injecting the soil with useful microorganisms like bacteria such as *Pseudomonas putida, P. fluorescens* (Proradix) or *Bacillus subtilis* FZB24 and accordingly *Bacillus amyloliquefaciens* FZB42 (RhizoVital 42) as well as fungi of the kind *Trichoderma* or *Mykorrhiza,* which has been done for many years, also the improvement of the humus content of the soil, the application of organic fertilizers or nutrients for the microflora are important.

But also a balanced nutrition of the plants according to the climatic as well as the soil and culture specific requirements is necessary and to some extend already state of the art. Fertilizers containing phosphite and slow-release nitrate fertilizers based on methylene urea also play an important role.

Inorganic phosphites are highly soluble in water and thus are very quickly absorbed by the roots of the plants. After the absorption the posphite is metabolised to phosphate. Known phosphite containing fertilizers are i.e. PHOS 60 (total nitrogene content 10% and 48 % P₂O₅ from phosphite) and PhosFung (total nitrogene content 3 %, 27 % P₂O₅ water-soluble, from phosphite and 18 % K₂O, water-soluble).

Methylene urea are chemically stable condensates from urea and formaldehyde. The mineralisation is mainly biotic. A large number of bacteria and funghi are able to mineralise methylene urea.

Methylene urea complies with the modern requirements for a nitrate supply tailored to the needs of crops and enable a considerable reduction of washing soluble nitrate compounds into the ground water.

Known nitrate slow-release fertilizers are i.e. the methylene urea fertilizers Salozene 39 G, (overall nitrate content 39%) and Salozene SC (overall nitrate content 28 %). Also mixtures from methylene urea fertilizers with other mineral fertilizer components have been developed. In some property rights mixtures of materials have already been proposed.

US2004/0242419A1, which has not been issued yet, according to claim 1 suggests a liquid mixture for the systemic induction of plants, which consists of a plant nutrient (et al. phosphoric acid or its salts) and a micro-organic extract (et al. an extract from microorganisms). Bacillus sp. is mentioned as option 4. US6228806 B describes a fertiliser composition comprising a conventional balanced inorganic fertilizer NPK, together with an effective quantity of beneficial micro-organisms. Bacillus subtilis, tris-(2,4-diphenoxyethyl) phosphite and urea-formaldehyde are mentioned among the possible components.

### Summary of the invention

The invention has the purpose to develop a new and effective agent for organic fertilization and for soil improvement. according to claim 1. It should be inexpensive and should consist of known basic materials; the speed of the microbial reduction of the nitrate should be controllable.

### Discription of the invention

The invention is implemented according to claims 1, and 10, the subclaims are preferred alternatives.
Principal item of the invention is the combination of mineral fertilizers and strains of bacillus. According to the invention inorganic phosphites and methylene urea are applied as mineral fertilizers and as bacillus-strains *bacillus subtilis* and accordingly *bacillus amyloliquefaciens.*
Preferred inorganic phosphites are alkaline salts or alkaline earth salts of phosphoric acid, especially preferred is ammonium phosphite. Methylene urea is a condensate from urea and formaldehyde whereat a polymer factor of 8-10 is preferred.
Due to the interaction with the used strains of bacillus the methylene urea in the soil slowly releases nitrate and so becomes a source of nitrate for the plant nutrition. Bacillus according to the invention are *bacillus subtilis* and *bacillus amyloliquefaciens* especially preferred are the strains of bacillus subtilis FZB24 (Registration No. DSM-ID 96-2) and bacillus amyloliquefaciens FZB 42 (Registration No. DSM-ID03-1506).
The following descriptions are given of the single components of the mixture according to the invention:
The used methylene urea (urea form) is a condensate of urea and formaldehyde and consists of different methylene urea molecules with molecular chains of different lengths. The release rate of the nitrate is directly related to the solubility of these molecular chains.
The release of nitrate by de-polymerisation and mineralisation occurs through microbial activity. It is influenced by the microbial concentration, their activity in the soil and by the temperature. Moisture has a limited effect, whereas pH-value and grain size have hardly any influence.

All of the carbon contained in the methylene urea (about 15%) is used by the microorganisms in the soil during the catabolism and thus initiates and encourages the microbial activity in the soil in the starting phase of plant growth as well as for the whole duration of the cultivation.

Bacillus strains (according to the invention the products of ABiTEP GmbH) *Bacillus subtilis* FZB24 and *Bacillus amyloliquefaciens* FZB42 (RhizoVital 42) have been on the market for about 10 years as plant fortifier and accordingly as organic fertilizer.

The effectiveness of the bacillus-products is based on a multitude of complex interactions with the plant:
- After settling on the roots the bacteria create a biofilm which, in competition to the plant-pathogens in the root space (i.e. fusarium, rhizoctonia or verticillium), uses the nutrition precipitation of the roots, block the settlement area and so lower the intensity of infestation.
- Phytohormones created by bacillus strengthen the development of the roots and therefore the absorption of nutrition as well as stress-resistance (dryness / wetness / salt concentration) and the tolerance towards soil-dwelling pathogens.
- Different enzymes are created (i.e. Phytase) which support the plant in using nutrients which are not usually accessible to the plant (i.e. organic phosphate compounds) and which first have to be digested by microbial activity. This improves the vitality and crop yield of the plant.
- Bacillus is able to stimulate the resistance induction of the plant against different plant-pathogens and so reduce the infestation.
- The production of so called secondary metabolites by bacillus is part of the bacteria's defence strategy against competitors in the soil. The metabolites are known for anti-fungal and anti-bacterial effects and support the defence mechanisms of the plant against pathogens.

The applied phosphites have a relatively complex working mechanism. On the one hand the pathogens are attacked directly. On the other hand defence mechanisms of the plant are activated and the creation of the plant's own phytohormone-like substances is supported.
Due to the complex working mechanisms of the phosphites there is a significantly lower chance for the development of resistant pathogens compared to other curative or systemic (chemical) active agents. The substance has a very good toxicological review as well as ecological characteristics. Phosphites are oxidised to phosphate in the soil, thus being re-integrated quickly into the natural cycle.

The main characteristic of this invention lies within the combination of the 3 components described here. This does not only lead to an addition of the single effects, but has a synergetic effect. The mixture of materials according to the invention can vary in its consistency quite a lot. It can be available as suspension, powder or granules.
A common mixture contains equal weight measures of the components. Also a relation of 20 g of microorganism cultures with a cell count of 10¹¹ cells per gram, 40 g of ammonium phosphite and 40 g of methylene urea is practicable.
Depending on the condition of the soil in which the plants are supposed to grow, especially its nutrient content, the mixtures can be varied according to the invention.
The mixture of materials is created by dissolving the ingredients phosphite and methylene urea in a sufficient amount of water followed by adding the bacteria culture. It is also sold in this form and lasts for about 12-14 months. The mixture can also be made from dried microorganism cultures which are then mixed with solid ammonium phosphite and solid methylene urea. It is also possible to make granules from this mixture of solids.
The mixture is worked into the soil before sowing or planting, if necessary it is applied again later for a second time.

The following examples show how the invention can be carried out.

### Examples of carrying out the invention

### Examples for liquid products

| | | | | |
|---|---|---|---|---|
| to 1 | Bacillus sp | | to 2 | Bacillus sp |
| | inorganic phosphites | | | inorganic phosphites |
| | methylene urea | | | methylene urea |
| | | | | |
| 30,0 g | microorganism culture | | 30,0 g | microorganism culture |
| 21,0 g | ammonium phosphite | | 22,0 g | ammonium phosphite |
| 30,0 g | methylene urea | | 30,0 g | methylene urea |
| 19,0 g | water | | 18,0 g | water |
| 100,0 g | | | 100,0 g | |
| | | | | |
| to 1 | Bacillus sp | | to 2 | Bacillus sp |
| | inorganic phosphites | | | inorganic phosphites |
| | methylene urea | | | methylene urea |
| | | | | |
| 60,0 g | microorganism culture | | 60,0 g | microorganism culture |
| 21,0 g | ammonium phosphite | | 22,0 g | ammonium phosphite |
| 10,0 g | methylene urea | | 10,0 g | methylene urea |
| 9,0 g | water | | 8,0 g | water |
| 100,0 g | | | 100,0 g | |
| | | | | |
| to 1 | Bacillus sp | | to 2 | Bacillus sp |
| | inorganic phosphites | | | inorganic phosphites |
| | methylene urea | | | methylene urea |
| | | | | |
| 30,0 g | microorganism culture | | 30,0 g | microorganism culture |
| 45,0 g | ammonium phosphite | | 45,0 g | ammonium phosphite |
| 10,0 g | methylene urea | | 10,0 g | methylene urea |
| 15,0 g | water | | 15,0 g | water |
| 100,0 g | | | 100,0 g | |

### Examples not belonging to the invention

| | | | | |
|---|---|---|---|---|
| to 3 | Bacillus sp | | to 4 | Bacillus sp |
| | inorganic phosphites | | | methylene urea |
| **Present practice in tank mix** | | | | |
| | Bacillus 0,5 l/ha | | | |
| | Phosphite 1,5 l/ha | | | |
| | | | | |
| 20,0 g | microorganism culture | | 20,0 g | microorganism culture |
| 60,0 g | ammonium phosphite | | 80,0 g | methylene urea |
| 20,0 g | water | | 100,0 | |
| 100,0 g | | | | |
| | | | | |
| to 3 | Bacillus sp | | to 4 | Bacillus sp |
| | inorganic phosphites | | | methylene urea |
| **Present practice in tank mix** | | | | |
| | Bacillus 1,5 l/ha | | | |
| | Phosphite 2,0 l/ha | | | |
| | | | | |
| 27,8 g | microorganism culture | | 50,0 g | microorganism culture |
| 54,0 g | ammonium phosphite | | 50,0 g | methylene urea |
| 18,2 g | water | | 100,0 g | |
| 100,0 g | | | | |
| | | | | |
| to 3 | Bacillus sp | | to 4 | Bacillus sp |
| | inorganic phosphites | | | methylene urea |
| | | | | |
| 80,0 g | microorganism culture | | 80,0 g | microorganism culture |
| 15,0 g | ammonium phosphite | | 20,0 g | methylene urea |
| 5,0 g | water | | 100,0 g | |
| 100,0 g | | | | |
| to 5. | | inorganic phosphites | | |
| | | methylene urea | | |
| | | | | |
| | 37,0 g | ammonium phosphite | | |
| | 50,0 g | methylene urea | | |
| | 87,0 g | | | |
| | | | | |
| to 5. | | inorganic phosphites | | |
| | | methylene urea | | |
| | | | | |
| | 60,0 g | ammonium phosphite | | |
| | 20,0 g | methylene urea | | |
| | 20,0 g | water | | |
| | 100,0 g | | | |
| | | | | |
| to 5. | | inorganic phosphites | | |
| | | methylene urea | | |
| | | | | |
| | 15,0 g | ammonium phosphite | | |
| | 80,0 g | methylene urea | | |
| | 5,0 g | water | | |
| | 100,0 g | | | |

### Examples for solid products - powder / granules

| | | | | |
|---|---|---|---|---|
| to 1 | Bacillus sp | | to 2 | Bacillus sp |
| | inorganic phosphites | | | inorganic phosphites |
| | methylene urea | | | methylene urea |
| | | | | |
| 30,0 g | microorganism culture | | 30,0 g | microorganism culture |
| 40,0 g | ammonium phosphite | | 40,0 g | ammonium phosphite |
| 30,0 g | methylene urea | | 30,0 g | methylene urea |
| 100,0 g | | | 100,0 g | |
| | | | | |
| to 1. | Bacillus sp | | to 2 | Bacillus sp |
| | inorganic phosphites | | | inorganic phosphites |
| | methylene urea | | | methylene urea |
| | | | | |
| 60,0 g | microorganism culture | | 60,0 g | microorganism culture |
| 30,0 g | ammonium phosphite | | 30,0 g | ammonium phosphite |
| 10,0 g | methylene urea | | 10,0 g | methylene urea |
| 100,0 g | | | 100,0 g | |
| | | | | |
| to 1 | Bacillus sp | | to 2 | Bacillus sp |
| | inorganic phosphites | | | inorganic phosphites |
| | methylene urea | | | methylene urea |
| | | | | |
| 30,0 g | microorganism culture | | 30,0 g | microorganism culture |
| 60,0 g | ammonium phosphite | | 60,0 g | ammonium phosphite |
| 10,0 g | methylene urea | | 10,0 g | methylene urea |
| 100,0 g | | | 100,0 g | |

### Examples not belonging to the invention

| | | | | |
|---|---|---|---|---|
| to 3 | Bacillus sp | | to 4 | Bacillus sp |
| | inorganic phosphites | | | methylene urea |
| | | | | |
| 20,0 g | microorganism culture | | 20,0 g | microorganism culture |
| 80,0 g | ammonium phosphite | | 80,0 g | methylene urea |
| 100,0 g | | | 100,0 g | |
| | | | | |
| to 3. | Bacillus sp | | to 4 | Bacillus sp |
| | inorganic phosphites | | | methylene urea |
| | | | | |
| 27,8 g | microorganism culture | | 50,0 g | microorganism culture |
| 72,2 g | ammonium phosphite | | 50,0 g | methylene urea |
| 100,0 g | | | 100,0 g | |
| | | | | |
| | | | | |
| to 3 | Bacillus sp | | to 4 | Bacillus sp |
| | inorganic phosphites | | | inorganic phosphites |
| | | | | |
| 80,0 g | microorganism culture | | 80,0 g | microorganism culture |
| 20,0 g | ammonium phosphite | | 20,0 g | methylene urea |
| 100,0 g | | | 100,0 g | |
| to 5. | inorganic phosphites | | | |
| | methylene urea | | | |
| | | | | |
| 50,0g | ammonium phosphite | | | |
| 50,0g | methylene urea | | | |
| 100,0g | | | | |
| | | | | |
| to 5. | inorganic phosphites | | | |
| | methylene urea | | | |
| | | | | |
| 80,0g | ammonium phosphite | | | |
| 20,0g | methylene urea | | | |
| 100,0g | | | | |
| | | | | |
| to 5. | inorganic phosphites | | | |
| | methylene urea | | | |
| | | | | |
| 20.0g | ammonium phosphite | | | |
| 80,0g | methylene urea | | | |
| 100,0g | | | | |

Further additives:
- citric acid
- iminosuccinic acid, iminosuccinic acid-Na4-salt
- micronutrients B, Cu, Mn, Mo, Zn
- maltodextrine
- protein hydrolysate (mixture of amino acids)
- algae extract
- fine-particle silicic acid
- adhesive agents

## Claims

1. Mixture of materials to be used as organic fertilizer and for soil improvement, consisting of plant associated bacillus subtilis or bacillus amyloliquefaciens, inorganic phosphite and methylene urea.

2. Mixture of materials according to claim 1, **characterized in that** the bacillus subtilis is bacillus subtilis FZB24 (Registration No. DSM-ID 96-2).

3. Mixture of materials according to claim 1, **characterized in that** the bacillus amyloliquefaciens is bacillus amyloliquefaciens FZB 42 (Registration No. DSM-ID03-1506).

4. Mixture of materials according to claim 1, **characterized in that** the inorganic phosphite comprise alkaline salts or alkaline earth salts of phosphoric acids.

5. Mixture of materials according to claim 1, **characterized in that** the inorganic phosphite is ammonium phosphite.

6. Mixture of materials according to claim 1, **characterized in that** the methylene urea is a condensate from urea and formaldehyde , preferably a solid condensate from urea and formaldehyde with a polymer factor of 5 - 10 or a liquid condensate from urea and formaldehyde with a polymer factor of 2 - 5.

7. Mixture of materials according to claim 1, **characterized in that** the components bacillus subtilis or bacillus amyloliquefaciens, inorganic phosphite and methylene urea are contained in equal measures, preferably being dissolved in water / as a suspension.

8. Mixture of materials according to claim 1, **characterized by** containing 30-60 g of bacillus subtilis or bacillus amyloliquefaciens, 20-60 g of ammonium phosphite and 10-30 g of methylene urea.

9. Mixture of materials according to claim 1, **characterized by** containing citric acid, iminosuccinic acid, iminosuccinic acid-Na4-salt, micronutrients (B, Cu, Fe, Mn, Mo, Zn), maltodextrine, protein hydrolysate, algae extract, fine-particle silicic acid or adhesive agents as further ingredients.

10. Procedure for producing the mixture according to claims 1 - 9 by intensive mixing of the components inorganic phosphite and methylene urea followed by adding a culture of bacillus subtilis or bacillus amyloliquefaciens.

## Patentansprüche

1. Stoffgemisch zur Verwendung als organischer Dünger und zur Bodenverbesserung, bestehend aus pflanzenassoziiertem Bacillus subtilis oder Bacillus amyloliquefaciens, anorganischem Phosphit und Methylenharnstoff.

2. Stoffgemisch nach Anspruch 1, **dadurch gekennzeichnet, dass** es sich bei dem Bacillus subtilis um Bacillus subtilis FZB24 (Registrierungsnummer DSM-ID 96-2) handelt.

3. Stoffgemisch nach Anspruch 1, **dadurch gekennzeichnet, dass** der Bacillus amyloliquefaciens Bacillus amyloliquefaciens FZB 42 (Registrierungsnummer DSM-ID03-1506) ist.

4. Stoffgemisch nach Anspruch 1, **dadurch gekennzeichnet, dass** das anorganische Phosphit Alkalisalze oder Erdalkalisalze von Phosphorsäuren enthält.

5. Stoffgemisch nach Anspruch 1, **dadurch gekennzeichnet, dass** das anorganische Phosphit Ammoniumphosphit ist.

6. Stoffgemisch nach Anspruch 1, **dadurch gekennzeichnet, dass** der Methylenharnstoff ein Kondensat aus Harnstoff und Formaldehyd, vorzugsweise ein festes Kondensat aus Harnstoff und Formaldehyd mit einem Polymerfaktor von 5 - 10 oder ein flüssiges Kondensat aus Harnstoff und Formaldehyd mit einem Polymerfaktor von 2 - 5 ist.

7. Stoffgemisch nach Anspruch 1, **dadurch gekennzeichnet, dass** die Komponenten Bacillus subtilis oder Bacillus amyloliquefaciens, anorganisches Phosphit und Methylenharnstoff zu gleichen Teilen enthalten sind, vorzugsweise gelöst in Wasser / als Suspension.

8. Stoffgemisch nach Anspruch 1, **dadurch gekennzeichnet, dass** sie 30-60 g Bacillus subtilis oder Bacillus amyloliquefaciens, 20-60 g Ammoniumphosphit und 10-30 g Methylenharnstoff enthält.

9. Stoffgemisch nach Anspruch 1, **dadurch gekennzeichnet, dass** sie als weitere Bestandteile Zitronensäure, Iminodibernsteinsäure, Iminodibernsteinsäure -Na4-Salz, Mikronährstoffe (B, Cu, Fe, Mn, Mo, Zn), Maltodextrin, Proteinhydrolysat, Algenextrakt, hochdisperse Kieselsäure oder Haftmittel enthält.

10. Verfahren zur Herstellung des Stoffgemischs nach den Ansprüchen 1 - 9 durch intensives Mischen der Komponenten anorganisches Phosphit und Methylenharnstoff, und anschließendem Zusatz einer Kultur von Bacillus subtilis oder Bacillus amyloliquefaciens.

## Revendications

1. Mélange de matières à utiliser comme engrais organique pour l'amélioration des sols, composé de bacillus subtilis ou bacillus amyloliquefaciens associés à des végétaux, phosphites inorganiques et méthylène-urée.

2. Mélange de matières conformément à la revendication n°1, **caractérisé par le fait que** le bacillus subtilis est un bacillus subtilis FZB24 (enregistrement n° DSM-ID 96-2).

3. Mélange de matières conformément à la revendication n°1, **caractérisé par le fait que** le bacillus amyloliquefaciens est un bacillus amyloliquefaciens FZB 42 (enregistrement n° DSM-ID03-1506).

4. Mélange de matières conformément à la revendication n°1, **caractérisé par le fait que** les phosphites inorganiques contiennent des sels alcalins ou alcalino-terreux d'acides phosphoriques.

5. Mélange de matières conformément à la revendication n°1, **caractérisé par le fait que** le phosphite inorganique est du phosphite d'ammonium.

6. Mélange de matières conformément à la revendication n°1, **caractérisé par le fait que** le méthylène-urée est un condensat provenant d'urée et de formaldéhyde, de préférence un condensat solide provenant d'urée et de formaldéhyde avec un facteur de polymère de 5 - 10 ou un condensat liquide provenant d'urée et de formaldéhyde avec un facteur de polymère de 2 - 5.

7. Mélange de matières conformément à la revendication n°1, **caractérisé par le fait que** les composants bacillus subtilis ou bacillus amyloliquefaciens, phosphite inorganique et méthylène-urée sont contenus en parts égales, de préférence dissous dans de l'eau / sous forme de suspension.

8. Mélange de matières conformément à la revendication n°1, **caractérisé par** une teneur de 30 à 60 g de bacillus subtilis ou bacillus amyloliquefaciens, 20 à 60 g de phosphite d'ammonium et 10 à 30 g de méthylène-urée.

9. Mélange de matières conformément à la revendication n°1, **caractérisé par** une teneur en acide citrique, acide iminosuccinique, acide iminosuccinique-sel Na4, micronutriments (B, Cu, Fe, Mn, Mo, Zn), maltodextrine, hydrolysat protéique, extraits d'algues, acide silicique en particules fines ou agents adhésifs comme autres ingrédients.

10. Procédé de production du mélange conformément aux revendications n°1 à n°9, réalisé par un mélange intensif des composants phosphite inorganique et méthylène-urée, suivi d'un ajout de culture de bacillus subtilis ou bacillus amyloliquefaciens.
